# EUROPÄISCHE PATENTANMELDUNG

(11) **EP 1 091 079 A2**
(43) Veröffentlichungstag der Anmeldung: **11.04.2001**
(21) Anmeldenummer: 00119989.2
(22) Anmeldetag: 14.09.2000
(51) Int. Cl.: E06B 9/32, E06B 9/68

(54) **System zur Steuerung von motorischen Antriebseinheiten von Verdunklungssystemen oder Beschattungssystemen**

(30) Priorität: 06.10.1999 DE 19947961
(71) Anmelder: SOMFY Feinmechanik und Elektrotechnik GmbH, 72105 Rottenburg (DE)
(72) Erfinder: Steidle, Siegfried, 71254 Ditzingen (DE); Barth, Heinrich, 71229 Leonberg (DE); Froehlich, Oliver, 71735 Eberdingen-Hochdorf (DE); Weiss, Stefan, 71711 Steinheim-Kleinbottwar (DE)
(74) Vertreter: Otte, Peter, Dipl.-Ing.

(57) **Zusammenfassung**

Die vorliegende Erfindung betrifft ein Steuersystem zur Steuerung von motorischen Antriebseinheiten von Verdunklungssystemen oder Beschattungssystemen sowie die dazugehörigen Komponenten. Dabei werden die Antriebseinheiten (105, 205) jeweils durch eine Steuereinheit (10, 20) gesteuert, die mit einer Bedienschnittstelle (101, 201) zur Bedienung der jeweiligen Steuereinheit versehen sind. Es wird vorgeschlagen, daß das Steuersystem mindestens eine erste, eine erste Antriebseinheit (105) steuernde Steuereinheit (10) und eine zweite, eine zweite Antriebseinheit (205) steuernde Steuereinheit (20) aufweist. Die erste Steuereinheit (10) weist außerdem mindestens ein erstes Kommunikationsmodul (103) auf, über das die erste Steuereinheit (10) Steuerbefehle an die zweite Steuereinheit (20) versenden kann. Die zweite Steuereinheit (20) weist mindestens ein zweites Kommunikationsmodul (204) auf, mit dem die zweite Steuereinheit (20) Steuerbefehle von der ersten Steuereinheit empfangen kann.

## Beschreibung

### STAND DER TECHNIK

Die Erfindung betrifft ein Steuersystem zur Steuerung von motorischen Antriebseinheiten von Verdunklungssystemen oder Beschattungssystemen wie z.B. Rolläden, Markisen, Jalousien etc., nach dem Oberbegriff des Anspruchs 1, sowie eine Steuereinheit nach dem Oberbegriff des Anspruchs 9, eine Steuereinheit nach dem Oberbegriff des Anspruchs 10, eine Antriebseinheit nach dem Oberbegriff des Anspruchs 16 und eine Antriebseinheit nach dem Oberbegriff des Anspruchs 17.

Zur bequemeren Bedienung und als Voraussetzung zu einer Automatisierung werden Verdunklungs- oder Verschattungseinrichtungen, wie z.B. Rolläden, Markisen, Jalousien etc., mit motorische Antriebseinheiten ausgestattet. Im Falle eines Rolladens wird dazu z.B. anstatt einer manuell zu bedienenden Aufwickelrolle für Rolladengurte eine motorisch angetriebene Aufwickeleinheit in eine Wandausnehmung eingesetzt. Eine solche motorisch angetriebene Aufwickeleinheit ist z.B. aus DE-A-4420980 bekannt. Die dort beschriebene Aufwickeleinheit weist neben einem Antriebsmotor und einem dazugehörigen Getriebe unter anderem auch eine Steuereinrichtung für den Antriebsmotor auf, über die der Antriebsmotor durch manuellen Tastendruck, aber auch zeitgesteuert oder durch Helligkeitssensoren gesteuert in Auf- oder Abwickelrichtung ein- und ausgeschaltet werden kann. Darüber hinaus weist die Steuereinrichtung Mittel zur oberen und unteren Endabschaltung des Antriebsmotors auf. Eine solche Steuereinheit ist jeweils lediglich für die Steuerung der jeweiligen Aufwickeleinheit geeignet.

Weiterhin werden als motorische Antriebseinheiten für Verdunklungseinrichtungen auch sogenannte Rohrmotoren eingesetzt, die direkt in eine Welle zur Aufwicklung eines Rolladenpanzers oder einer Markise eingebaut werden können. Meist verfügt ein solcher Rohrmotor über integrierte Endschalter zur oberen und unteren Endabschaltung der Auf- und Abwickelbewegung. Das extern steuernde Ein- und Ausschalten des Rohrmotors durch einen Bediener wird über einen elektrischen Bedienschalter, im einfachsten Fall über einen elektrischen Tastschalter, vorgenommen, der über eine elektrische Leitung mit der jeweiligen Antriebseinheit üblicherweise in der Nähe des jeweiligen Rolladens oder der Markise angebracht ist. Ein solcher Schalter kann auch eine Zeitsteuerung für die ihm jeweils zugeordnete Antriebseinheit aufweisen. In einer in DE-OS 33 04 962 beschriebenen Variante sind Antriebseinheit und Schalter nicht durch eine elektrische, sondern durch eine leitungslose Verbindung, z.B. eine Funkstrecke miteinander gekoppelt. Sowohl leitungslos als auch leitungsgebunden miteinander gekoppelt bilden Antriebseinheit und Steuerschalter jedoch auch in diesen Fällen eine lokale Funktionseinheit.

Insbesondere bei Markisen mit einem motorischen Antrieb ist es verbreitet, zusätzlich einen Wind- und/oder Regensensor anzubringen, der bei aufkommendem Wind und/oder Regen den Antrieb der jeweiligen Markise in Aufwickelrichtung einschaltet, um eine Beschädigung der Markise durch Witterungseinwirkung zu vermeiden. Ein solcher Wind- und/oder Regensensor wirkt jeweils auf die Antriebseinheit einer einzelnen Markise.

Neben den oben beschriebenen lokalen, auf die Steuerung einer einzelnen Antriebseinheit beschränkten Steuereinheiten, ist aus DE-A-44 20 945 eine zentrale Fernsteuerungsvorrichtung für motorische Antriebseinheiten bekannt. Bei der Fernsteuerungsvorrichtung handelt es sich um ein separates, mobiles oder ortsfestes Gerät, mit dem man aus der Ferne eine oder mehrere lokale Steuereinheiten von Antriebseinheiten entweder zusammen als Gruppe oder individuell einzeln schalten kann. Die lokalen Steuereinheiten sind dabei sternförmig über leitungsgebundene oder leitungslose Verbindungen an die zentrale Fernsteuerungsvorrichtung angekoppelt, was allerdings bei der leitungsgebundenen Variante unter Umständen lange, teuer unter Putz zu verlegende Leitungsstrecken bedeuten kann. An die zentrale Fernsteuerungsvorrichtung können über Tastendruck, durch Regen- Helligkeits- und andere Arten von Sensoren sowie durch eine Spracherkennung Steuerbefehle gegeben werden, welche die Fernsteuerungsvorrichtung dann als Steuerbefehle an die lokalen Steuereinheiten der jeweiligen Antriebseinheiten weitergibt. Die lokalen Steuereinheiten steuern dann ihre Antriebseinheit gemäß den Steuerbefehlen. Die Fernsteuerungsvorrichtung kann jedoch nur im Zusammenwirken mit einer lokalen Steuereinheit Befehle an eine Antriebseinheit geben und kann nicht direkt als Steuereinheit auf eine Antriebseinheit wirken. Wenn über die zentrale Fernsteuerungsvorrichtung ein Steuerbefehl an eine lokale Steuereinheit gegeben wird, wird dieser Steuerbefehl von der lokalen Steuereinheit zunächst vorrangig ausgeführt, kann jedoch anschließend durch eine Bedienhandlung direkt an der lokalen Steuereinheit in einer Art "Override"-Funktion ganz oder teilweise widerrufen werden.

### VORTEILE DER ERFINDUNG

Das erfindungsgemäße System zur Steuerung von motorischen Antriebseinheiten mit den kennzeichnenden Merkmalen der Hauptansprüche hat demgegenüber den Vorteil, daß mehrere Steuereinheiten sowohl simultan vorbestimmte Steuerfunktionen ausführen können, die zentral an einer der Steuereinheiten vorgegeben werden, als auch jeweils lokal, an einer jeweiligen Steuereinheit gegebene Bedienervorgaben ausführen können. Auf eine teuere und unter Umständen schwer installierbare Fernsteuerungsvorrichtung kann verzichtet werden, weil durch die Erfindung über eine ohnehin schon vorhandene lokale Steuereinheit Steuerbefehle an weitere an das System angeschlossene Steuereinheiten gegeben werden können. Die Steuereinheiten bilden erfindungsgemäß ein Verbundsystem, das aus mindestens zwei Steuereinheiten besteht, die über ein Bussystem miteinander gekoppelt sind. In einem solchen Bussystem übernimmt diejenige Steuereinheit, über die zentral Steuerbefehle gegeben werden, eine Masterfunktion und alle weiteren Steuereinheiten eine Slavefunktion. Im genannten einfachsten Fall verfügt die als Master fungierende Master-Steuereinheit über einen Sender zum Senden von Steuerbefehlen und die als Slave arbeitende Slave-Steuereinheit über einen Empfänger für diese Steuerbefehle. Die Master-Steuereinheit sendet nach externen Vorgaben, die z.B. manuell durch einen Bediener an den Bedienelementen der Master-Steuereinheit oder durch einen Helligkeitssensor der Master-Steuereinheit gegeben werden, Steuerbefehle an die mit ihr verbundenen Slave-Steuereinheiten, so daß alle Steuereinheiten simultan jeweils denselben Steuerbefehl ausführen. Auf diese Weise können z.B. mehrere in einem Verbund geschaltete Rolläden einer Fensterfront simultan geöffnet oder geschlossen werden. Dabei können die ohnehin vorhandenen Bedienelemente der Master-Steuereinheit für die Befehlsgabe an alle erfindungsgemäß miteinander verbundenen Steuereinheiten genutzt werden.

Außerdem ist ein Sensor, z.B. der genannte Helligkeitssensor oder ein Wind-, Bewegungs- oder Regensensor, nur ein einziges Mal für einen ganzen Verbund anzuschaffen und zu installieren. Weiterhin kann eine zentrale Zeitsteuerung an die Master-Steuereinheit angeschlossen werden, so daß eine stets synchrone Funktion aller am Verbund beteiligten Steuereinheiten gewährleistet ist und eine Programmierung nur ein einziges Mal an zentraler Stelle vorgenommen werden muß. Neben der zentralen Steuerung durch die Master-Steuereinheit ist es jedoch weiterhin möglich, eine Antriebseinheit jeweils individuell über deren zugeordnete lokale Steuereinheit manuell zu steuern sowie dort vorhandene Individualfunktionen beizubehalten. So können z.B. an einer lokalen Steuereinheit individuell die Endlagen und die Bewegungsgeschwindigkeit der jeweiligen Antriebseinheit festgelegt sein, oder eine lokale Sicherheitsfunktion, wie z.B. ein Einklemmschutz installiert sein. Dadurch können die von einer Master-Steuereinheit gegebenen Steuerbefehle auch sehr einfach gestaltet sein und beispielsweise "Schließen bis Endlage" lauten. Das "Abschalten bei Endlage", abhängig z.B. von einer jeweiligen Rolladenlänge, steuert dann die jeweilige Slave-Steuereinheit individuell. Tritt bei einer Steuereinheit eine Störung auf, bleibt diese lokal begrenzt. Bis auf die von einer Störung betroffene Steuereinheit können alle anderen Steuereinheiten, unabhängig ob Master- oder Slave-Steuereinheit, einen zentralen Steuerbefehl, z.B. "Schließen bis Endlage" umsetzen.

Vorteilhaft erweist sich auch, daß durch die Erfindung auf sehr einfache Weise voneinander unabhängige Verbünde aus Steuereinheiten gebildet werden können. So können z.B. die Steuereinheiten von Antriebseinheiten jeweils einer Gebäudefront zusammengefaßt werden. Je nach Sonneneinstrahlung auf die jeweilige Gebäudefront können dann die Rolläden oder Jalousien an dieser Gebäudefront geöffnet oder geschlossen werden. Eine zentrale Steuerung wie die eingangs dargestellte Fernsteuerungsvorrichtung könnte eine derartig individuelle Steuerung verschiedener Gebäudefront nur mit erheblichem technischen Aufwand leisten.

Eine individuelle Adressierung, wie bei Bussystemen üblicherweise erforderlich, kann durch die Erfindung entfallen. Es wird lediglich festgelegt, daß die Master-Steuereinheit Steuerbefehle sendet, welche die Slave-Steuereinheiten zu "hören" (zu empfangen) und umzusetzen haben.

Die erfindungsgemäßen Steuereinheiten können einerseits als separate Steuereinheiten ausgeführt sein, die mit ihrer jeweiligen Antriebseinheit z.B. über elektrische Leitungen verbunden sind. Andrerseits können Antriebseinheit und Steuereinheit jeweils auch zu einem Gesamtsystem verbunden sein. Ein solches Gesamtsystem kann beispielsweise anstatt einer Aufwickelrolle für Rolladengurte in eine Wandausnehmung eingesetzt werden. In einer anderen Ausführungsform kann die Steuereinheit z.B. in einen Rohrmotor oder einen auf eine Rolladenwelle aufzuflanschenden Elektromotor integriert sein. Bedienervorgaben werden dann z.B. an einem von der Steuereinheit abgesetzt montierten Bedienelement erfaßt.

Weitere vorteilhafte Ausgestaltungen sind den abhängigen Ansprüchen und der Beschreibung zu entnehmen.

In einer besonders bevorzugten Variante der Erfindung ist es insbesondere möglich, einer Master-Steuereinheit deren Masterfunktion und/oder einer Slave-Steuereinheit deren Slavefunktion statisch zuzuweisen, indem z.B. in den jeweiligen Steuereinheiten Codierstecker, auch "Jumper" genannt, je nach Art des Steckens die Master- oder die Slave-Funktion vorgeben oder indem nur die Master-Steuereinheit mit einem Sendemodul zum Senden von Steuerbefehlen ausgerüstet ist, während die jeweiligen Slave-Steuereinheiten nur über Empfangsmodule verfügen. Die Steuereinheiten können durch Abgreifen der Codierstecker, durch Anliegen eines Empfangssignales oder anhand eines entsprechend programmierten Speicherfeldes in einem Speicher der jeweiligen Steuereinheit ermitteln, ob sie in einem erfindungsgemäßen System eine Slavefunktion oder eine Masterfunktion wahrnehmen.

Weiterhin ist es aber auch möglich, die Master- und Slavefunktion dynamisch zu definieren. Wenn z.B. zwei erfindungsgemäß miteinander verbundene Steuereinheiten jeweils sowohl ein Sendemodul als auch ein Empfangsmodul aufweisen, so kann die Master- und Slavefunktion von Fall zu Fall sowohl von der einen als auch von der anderen Steuereinheit wahrgenommen werden. Erhält die eine Steuereinheit z.B. von einem an diese Steuereinheit angeschlossenen Helligkeitssensor ein Signal "Rolladen Schließen", so kann sie einen entsprechenden Steuerbefehl an die andere Steuereinheit versenden und beide Steuereinheiten setzen dann das Signal "Rolladen Schließen" um. Gibt anschließend jedoch ein Bediener an einer der Steuereinheiten, z.B. derjenigen Steuereinheit ohne Helligkeitssensor, an deren Bedienelementen einen manuellen Befehl "Alle Rolläden Öffnen", sendet diese Steuereinheit den entsprechenden Steuerbefehl auch an die Steuereinheit mit dem Helligkeitssensor. Durch eine Programmierung von Steuerbefehlsprioritäten an den beiden Steuereinheiten kann eine Kollision von gegensätzlichen Steuerbefehlen vermieden werden. Beispielsweise wird meist eine manuelle Steuerung vorrangig vor einer Steuerung durch einen Helligkeitssensor behandelt werden.

Je nach Ausführungsform und je nach den örtlichen Gegebenheiten kommunizieren die erfindungsgemäßen Steuereinheiten leitungsgebunden, z.B. über elektrische oder optische Leitungen, oder leitungslos, z.B. über eine Funk-, Ultraschall- oder Infrarot-Sichtverbindung. Dabei erweist es sich auch als vorteilhaft, daß die dazu erforderlichen Kommunikationsmodule nicht unbedingt fest in die jeweilige Steuereinheit eingebaut sein müssen, sondern auch als Steckmodule je nach Bedarf nachgerüstet werden können. So kann eine Kommunikation auch nachträglich veränderten Bedürfnissen angepasst werden oder ein vorhandenes, erfindungsgemäßes Steuerungssystem um eine Steuereinheit erweitert werden, die bislang ohne Ankopplung an ein erfindungsgemäßes Steuerungsystem arbeitete.

Erfindungsgemäß kann lediglich die Master-Steuereinheit mit einem Sendemodul ausgerüstet sein, während die Slave-Steuereinheiten nur über Empfangsmodule verfügen. Die Slave-Steuereinheit "hören" dann auf die auf einer gemeinsamen Verbindung von der Master-Steuereinheit gegebenen Steuerbefehle. Es ist jedoch auch möglich, daß solche Slave-Steuereinheiten, die zwischen einer Master-Steuereinheit und einer letzten Slave-Steuereinheit eines Bussystemes geschaltet sind, eine Art Zwischenverstärkerfunktion übernehmen, indem sie von der Master-Steuereinheit empfangene Steuerbefehle über ein eigenes Sendemodul an die jeweils nächste Slave-Steuereinheit weitersenden. Auf diese Weise werden die Steuerbefehle immer wieder regeneriert und es können nahezu unbegrenzt Slave-Steuereinheiten an eine Master-Steuereinheit angekoppelt werden. Außerdem kann innerhalb eines Bussystemes auch das Übertragungsmedium gewechselt werden, z.B. indem die Steuereinheiten auf den einzelnen Übertragungsstrecken je nach örtlichen Gegebenheiten leitungsgebunden oder leitungslos kommunizieren.

Master-Steuereinheit und Slave-Steuereinheit können einerseits auf eigens dafür installierten Leitungen miteinander kommunizieren, andererseits in einer weiteren Variante der Erfindung aber auch über ein Bussystem eines Gebäudeautomatisierungssystemes. Die Master-Steuereinheit muß dann lediglich ihre Steuerbefehle in Datentelegrammen einer solchen Form senden, wie sie in einem solchen Gebäudeautomatisierungssystem vorgeschrieben sind. Diese Datentelegramme können dann beispielsweise von einer Zentrale des Gebäudeautomatisierungssystemes mitprotokolliert werden.

### ZEICHNUNG

Ausführungsbeispiele der Erfindung sind in den Zeichnungen dargestellt und in der nachfolgenden Beschreibung näher erläutert. Es zeigen
- Fig. 1: eine schematische Darstellung eines erfindungsgemäßen Steuerungssystemes aus zwei Steuereinheiten sowie der durch die Steuereinheiten gesteuerten Antriebseinheiten,
- Fig. 2: eine weitere Ausführungsform eines erfindungsgemäßen Steuerungssystemes aus drei kaskadiert geschalteten Steuereinheiten und
- Fig. 3: eine weitere Ausführungsform eines erfindungsgemäßen Steuerungssystemes aus drei Steuereinheiten, wobei zwei der Steuereinheiten parallel geschaltet sind.

### BESCHREIBUNG DER AUSFÜHRUNGSBEISPIELE

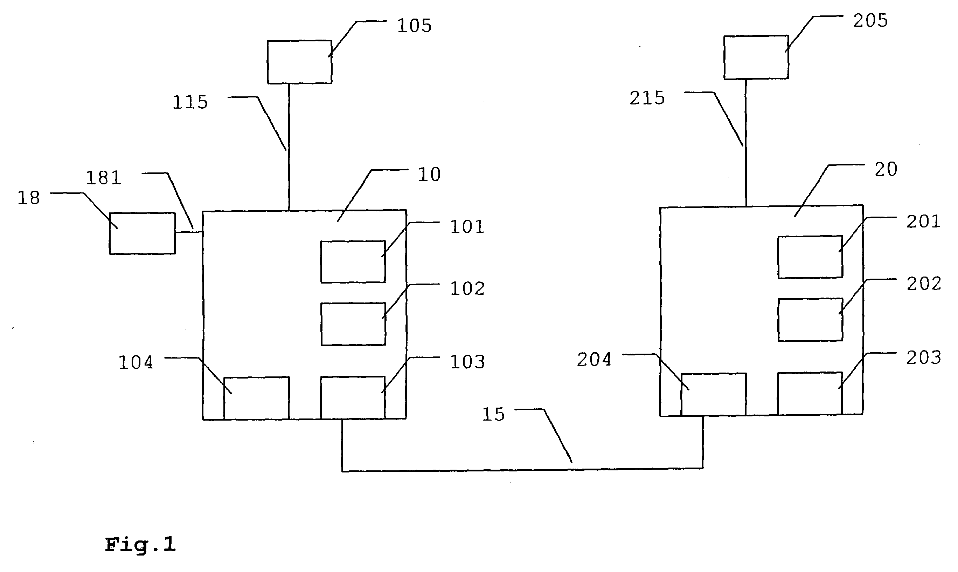

Figur 1 zeigt stark schematisiert eine sehr einfache Ausführungsform der Erfindung. Dargestellt sind eine erste Steuereinheit 10 und eine zweite Steuereinheit 20, wobei die erste Steuereinheit 10 über eine Steuerleitung 115 eine motorische Antriebseinheit 105 und die zweite Steuereinheit 20 über eine Steuerleitung 215 eine motorische Antriebseinheit 205 steuert. Bei den Antriebseinheiten 105 und 205 handelt es sich z.B. um elektrische Rolladenmotoren oder Antriebe für Markisen, die über ihre jeweilige Steuerleitung 115 bzw. 215 von den Steuereinheiten 10 bzw. 20 Schaltbefehle oder Steuerspannungen für eine Aufwickel- oder Abwickelbewegung oder einen Stop erhalten. Die Steuereinheit 10 weist ein Tastenfeld 101, die Steuereinheit 20 ein Tastenfeld 201, jeweils mit in Figur 1 nicht dargestellten Tasten zur Gabe beispielsweise eines Aufwickel-, Abwickel oder Stopbefehls durch einen Bediener auf. Weitere Funktionen, wie z.B. "Abschalten in den Endlagen" oder "Abschalten bei Überlastung" können von den Steuereinheiten 10 und 20 für die ihnen zugeordneten Antriebseinheiten 105 bzw. 205 lokal ausgeführt werden. Die Steuereinheiten 10 und 20 weisen intern in Figur 1 nicht dargestellte Mittel zur Steuerung auf, z.B. elektronische Logikschaltungen und/oder einen einfachen Mikroprozessor sowie Speichermittel.

Weiterhin weisen die Steuereinheiten 10 und 20 je ein Sendemodul 103 bzw. 203 sowie ein Empfangsmodul 104 bzw. 204 auf, die zur Kommunikation zwischen den Steuereinheiten dienen. Die Sendemodule 103 bzw. 203 sowie die Empfangsmodule 104 bzw. 204 können in die jeweiligen Steuereinheiten 10 und 20 integriert sein oder als aufsteckbare Module ausgeführt sein. Das Sendemodul 103 kann über eine Kommunikationsverbindung 15 Steuerbefehle an das Empfangsmodul 204 übertragen, wie z.B. "Vollständig Abwickeln bis zur Endlage", "Vollständig Aufwickeln bis zur Endlage", Einstellen einer vorbestimmten Sonnenabsenkposition" oder "Stop". Die Kommunikationsverbindung 15 kann beispielsweise eine elektrische oder optische Leitung, aber auch eine Funkstrecke sein. Die Steuerbefehle werden beispielsweise in Form digitaler Datentelegramme, analoger Signalspannungen oder Frequenzen übertragen. Im Falle von Frequenzen erzeugt der Sender beispielsweise digitale Rechtecksignale. Jedem Steuerbefehl (z.B. vier Steuerbefehle) wird eine bestimmte Frequenz zugeordnet (z.B. f₀, 2f₀, 4f₀, 8f₀). Da sich das gleichzeitige Senden mehrerer Befehle aufgrund der Befehlsstruktur ausschließt, kann eine Frequenz permanent auf dem Bus verbleiben, was die Störsicherheit erhöht. Die empfangenden Steuereinheiten bzw. Empfangsmodule müssen dann, z.B. mittels Periodendauermessung, die auf dem Bus liegende Frequenz bestimmen.

Das Empfangsmodul 104 sowie das Sendemodul 203 können auch entfallen, da diese Module nicht zur Übertragung von Steuerbefehlen gebraucht werden. Wird an dem Tastenfeld 101 der Steuereinheit 10 per Tastendruck durch einen Bediener ein Steuerbefehl gegeben, z.B. "Vollständig Aufwickeln bis zur Endlage", führt die Steuereinheit 10 diesen Steuerbefehl einerseits für ihre Antriebseinheit 105 lokal selbst aus, sendet den Steuerbefehl andrerseits auch an die Steuereinheit 20 zur dortigen Ausführung an der Antriebseinheit 205. Dabei kann vorbestimmt sein, daß die Steuereinheit 10 diesen Steuerbefehl nur dann an die Steuereinheit 20 sendet, wenn der Bediener zusammen mit dem Tastendruck auf das Tastenfeld 101 auch eine Taste 102 "Steuerung für alle Steuereinheiten" drückt, die auf der Steuereinheit 10 angeordnet ist. Die Steuereinheit 20 weist eine zur der Taste 102 analoge Taste 202 auf, die allerdings wegen der Slave-Funktione der Steuereinheit 20 wirkungslos bleibt.

An die Steuereinheit 10 ist weiterhin ein Sensor 18 über eine Leitung 181 angeschlossen. Bei dem Sensor 18 handelt es sich z.B. um einen Helligkeitssensor oder einen Glasbruchsensor. Wird von dem Sensor ein Signal gegeben, z.B. ein bestimmter Helligkeitsobergrenzwert oder ein Signal, daß ein Glasbruch vorliegt, ermittelt die Steuereinheit 10 einen dazu gehörigen Steuerbefehl, z.B. "Vollständig Abwickeln bis zur Endlage", und führt diesen Steuerbefehl einerseits für ihre Antriebseinheit 105 lokal selbst aus, sendet den Steuerbefehl andererseits auch an die Steuereinheit 20 zur dortigen Ausführung an der Antriebseinheit 205.

In die Steuereinheit 10 kann auch eine Zeitsteuerung integriert sein, deren Steuerbefehle nicht nur lokal von der Steuereinheit 10 ausgeführt werden, sondern auch nach Übertragung des Steuerbefehles an die Steuereinheit 20 auch von dieser Steuereinheit. Es ist auch möglich, daß anstatt des Sensors 18 ein Zeitsteuerungsmodul angekoppelt wird, das der Steuereinheit 10 Steuerbefehle zur lokalen Ausführung als auch zum Weiterversand an die Steuereinheit 20 vorgibt. Weiterhin kann anstatt des Sensors 18 auch ein Spracherkennungsmodul angebracht sein, über das Steuerbefehle durch einen Bediener per Sprache eingegeben werden können. Ein solches Spracherkennungsmodul kann auch - ebenso wie das genannte Zeitsteuerungsmodul - in die Steuereinheit 10 integriert sein.

Die Steuereinheit 10 kann allein schon an dem Vorhandensein des Sendemoduls 103 erkennen, daß sie als Master-Steuereinheit arbeiten soll, während die Steuereinheit 20 bereits anhand eines Anliegens eines Empfangssignales an dem Empfangsmodul 204 ermitteln kann, daß sie als Slave-Steuereinheit agieren soll, also über das Empfangsmodul 204 empfangene Steuerbefehle umsetzen soll. Es kann auch vorbestimmt sein, daß die Steuereinheit 10 dann als Master-Steuereinheit arbeitet, wenn eine elektrische Leitung in das Sendemodul 103 eingesteckt worden ist oder daß die Steuereinheit 20 dann als Slave-Steuereinheit arbeitet, wenn eine elektrische Leitung in das Empfangsmodul 204 eingesteckt worden ist.

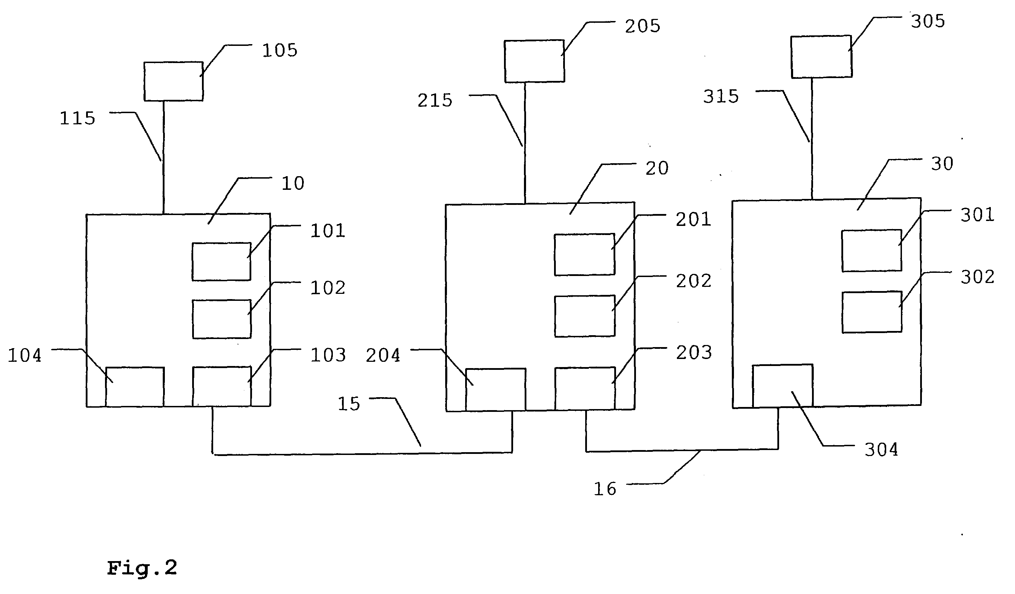

Figur 2 zeigt eine bevorzugte Weiterbildung des aus Figur 1 bekannten Steuerungssystems. In Figur 2 ist neben den aus Figur 1 bekannten Steuereinheiten 10 und 20 eine weitere, gleichartige Steuereinheit mit einem Index 30 gezeigt. Die Steuereinheit 30 steuert über eine Steuerleitung 315 eine Antriebseinheit 305 und kann über ein Tastenfeld 301 lokale Steuerbefehle erfassen. Weiterhin weist die Steuereinheit 30 ein Empfangsmodul 304 auf, mit dem sie auf einer Kommunikationsverbindung 16 von der Steuereinheit 20 gesendete Steuerbefehle empfangen kann. Die Steuereinheit 30 kann wie die Steuereinheit 20 ermitteln, ob sie als Master-Steuereinheit oder, wie in Figur 2 gezeigt, als Slave-Steuereinheit konfiguriert ist, z.B. weil in das Empfangsmodul 304 eine elektrische Leitung gesteckt ist. Wenn die Steuereinheit 20 einen Steuerbefehl über das Empfangsmodul 204 empfängt, führt sie diesen Steuerbefehl lokal aus, sendet diesen Steuerbefehl aber auch über das Sendemodul 203 und die Kommunikationsverbindung 16 an das Empfangsmodul 304, so daß auch die Steuereinheit 30 den Steuerbefehl ausführen kann. Über ein nicht dargestelltes Sendemodul kann die Steuereinheit 30 den Steuerbefehl auch an eine weitere, in Figur 2 nicht dargestellte Slave-Steuereinheit senden. Der Steuerbefehl wird durch die Steuereinheit 30 auf diese Weise regeneriert, so daß nahezu beliebig viele, ihrerseits Steuerbefehle regenerierende Steuereinheiten kaskadiert aneinander gekoppelt werden können. Außerdem können die Kommunikationsverbindungen 15 und 16 unterschiedlich ausgeführt sein, z.B. einmal als Funkstrecke und einmal als Infrarot-Lichtwellenleiter.

In einer in Figur 2 nicht dargestellten Variante kann die Steuereinheit neben dem Sendemodul 103 ein weiteres Sendemodul aufweisen, über das die Steuereinheit 10 parallel zu dem Sendemodul 103 Steuerbefehl versenden kann. Das Empfangsmodul 304 kann dann beispielsweise anstatt mit dem Sendemodul 203 mit diesem weiteren Sendemodul der Steuereinheit 10 verbunden sein und von diesem Steuerbefehle empfangen.

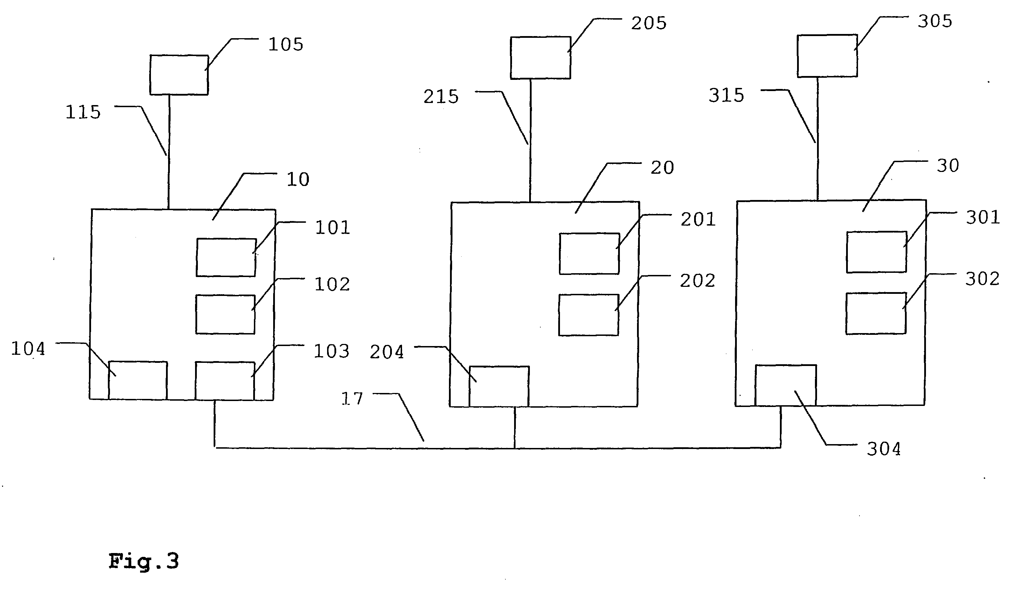

Figur 3 zeigt die aus Figur 2 bekannte Anordnung, lediglich mit dem Unterschied, daß die Steuereinheit 20 kein Sendemodul 203 und die Steuereinheit 30 kein Sendemodul 303 aufweisen sowie die Kommunikationsverbindungen 15 und 16 entfallen. Stattdessen ist eine Kommunikationsverbindung 17 gezeigt, über die von dem Sendemodul 103 Steuerbefehle gesendet werden. Die Steuereinheiten 20 und 30 "hören" diese Steuerbefehle auf der Kommunikationsverbindung 17 mit ihren Empfangsmodulen 204 bzw. 304 und setzen diese Steuerbefehle anschließend lokal an ihren Antriebseinheiten 205 bzw. 305 um. Hierbei können zwar die Sendemodule 203 und 204 eingespart werden, allerdings wird durch die Parallelschaltung der Empfangsmodule 204 und 304 der Signalpegel abfallen oder, z.B. im Falle einer Infrarot-Sichtverbindung könnte das Empfangsmodul 304 schon für eine korrekten Signalempfang zu weit von dem Sendemodul 103 entfernt sein. Es kann also im Rahmen der Erfindung von Fall zu Fall entschieden werden, welche der in den Figuren 2 und 3 dargestellten Konfigurationen unter den jeweiligen Gegebenheiten die günstigste ist. Mischformen sind ebenfalls möglich. So kann die Steuereinheit 10 mittels zweier Sendemodule beispielsweise zwei separate, auch wie in den Figuren 2 und 3 unterschiedlich konfigurierte Konfigurationen Bussysteme aus Slave-Steuereinheiten ansteuern.

## Patentansprüche

1. Steuersystem zur Steuerung von motorischen Antriebseinheiten von Verdunklungssystemen oder Beschattungssystemen, wobei die Antriebseinheiten (105, 205) jeweils durch eine Steuereinheit (10, 20) gesteuert werden, die mit einer Bedienschnittstelle (101, 201) zur Bedienung der jeweiligen Steuereinheit versehen sind, **dadurch gekennzeichnet, daß** das Steuersystem mindestens eine erste, eine erste Antriebseinheit (105) steuernde Steuereinheit (10) und eine zweite, eine zweite Antriebseinheit (205) steuernde Steuereinheit (20) aufweist, wobei die erste Steuereinheit (10) mindestens ein erstes Kommunikationsmodul (103) aufweist, das derart ausgestaltet ist, daß die erste Steuereinheit (10) Steuerbefehle an die zweite Steuereinheit (20) versenden kann und wobei die zweite Steuereinheit (20) mindestens ein zweites Kommunikationsmodul (204) aufweist, das derart ausgestaltet ist, daß die zweite Steuereinheit (20) Steuerbefehle von der ersten Steuereinheit empfangen kann.

2. Steuersystem nach Anspruch 1, dadurch gekennzeichnet, daß die zweite Steuereinheit (20) ein drittes Kommunikationsmodul (203) aufweist, das derart ausgestaltet ist, daß die zweite Steuereinheit (20) von der ersten Steuereinheit empfangene Steuerbefehle an eine weitere Steuereinheit weiterversenden kann.

3. Steuersystem nach Anspruch 1, dadurch gekennzeichnet, daß die erste Steuereinheit (10) ein Erkennungsmittel aufweist, das derart ausgestaltet ist, daß die erste Steuereinheit (10) ermitteln kann, daß sie autorisiert ist, Steuerbefehle über das erste Kommunikationsmodul zu versenden.

4. Steuersystem nach Anspruch 1, dadurch gekennzeichnet, daß die zweite Steuereinheit (20) ein Erkennungsmittel aufweist, das derart ausgestaltet ist, daß die zweite Steuereinheit (20) ermitteln kann, daß sie über das zweite Kommunikationsmodul empfangene Steuerbefehle als gültige Steuerbefehle akzeptieren muß.

5. Steuersystem nach Anspruch 1, dadurch gekennzeichnet, daß die erste Steuereinheit (10) und die zweite Steuereinheit (20) leitungsgebunden miteinander kommunizieren.

6. Steuersystem nach Anspruch 1, dadurch gekennzeichnet, daß die erste Steuereinheit (10) und die zweite Steuereinheit (20) leitungslos miteinander kommunizieren.

7. Steuersystem nach Anspruch 1, dadurch gekennzeichnet, daß die erste Steuereinheit (10) und die zweite Steuereinheit (20) über eine Bussystem für eine Gebäudeautomatisierung miteinander kommunizieren.

8. Steuersystem nach Anspruch 1, dadurch gekennzeichnet, daß vorbestimmbar ist, welche Arten von Steuerbefehlen von der ersten Steuereinheit (10) an die zweite Steuereinheit (20) als gültige Steuerbefehle versendet werden.

9. (Erste) Steuereinheit zur Steuerung einer (ersten) motorischen Antriebseinheit (105) für ein Verdunklungssystem oder ein Verschattungssystem, die mit einer Bedienschnittstelle (101) zur Bedienung versehen ist, **dadurch gekennzeichnet, daß** die (erste) Steuereinheit (10) mindestens ein erstes Kommunikationsmodul (103) aufweist, das derart ausgestaltet ist, daß die erste Steuereinheit (10) Steuerbefehle an eine zweite Steuereinheit (20) versenden kann, die eine zweite motorische Antriebseinheit (205) steuern kann, die mit einer Bedienschnittstelle (201) zur Bedienung versehen ist und mindestens ein zweites Kommunikationsmodul (204) aufweist, das derart ausgestaltet ist, daß die zweite Steuereinheit (20) Steuerbefehle von der ersten Steuereinheit (10) empfangen kann.

10. (Zweite) Steuereinheit (20) zur Steuerung einer (zweiten) motorischen Antriebseinheit (205) für ein Verdunklungssystem oder ein Verschattungssystem, die mit einer Bedienschnittstelle (201) zur Bedienung versehen ist, **dadurch gekennzeichnet, daß** die (zweite) Steuereinheit (20) mindestens ein zweites Kommunikationsmodul (204) aufweist, das derart ausgestaltet ist, daß die zweite Steuereinheit (20) Steuerbefehle von einer ersten Steuereinheit (10) empfangen kann, die eine erste motorische Antriebseinheit (105) steuern kann, die mit einer Bedienschnittstelle (101) zur Bedienung versehen ist und mindestens ein erstes Kommunikationsmodul (103) aufweist, das derart ausgestaltet ist, daß die erste Steuereinheit (10) Steuerbefehle an die zweite Steuereinheit (20) senden kann.

11. (Erste) Steuereinheit (10) nach Anspruch 9, dadurch gekennzeichnet, daß die Steuereinheit mindestens eine Schnittstelle (181) für den Empfang eines Sensorsignales aufweist.

12. (Erste) Steuereinheit nach Anspruch 9, dadurch gekennzeichnet, daß die erste Steuereinheit (10) eine Bedienschnittstelle aufweist, die derart ausgestaltet ist, daß die erste Steuereinheit (10) Bedienerbefehle per Spracherkennung erfassen kann.

13. (Erste) Steuereinheit nach Anspruch 9, dadurch gekennzeichnet, daß die erste Steuereinheit (10) ein Erkennungsmittel aufweist, das derart ausgestaltet ist, daß die erste Steuereinheit (10) ermitteln kann, daß sie autorisiert ist, Steuerbefehle über das erste Kommunikationsmodul zu versenden.

14. (Zweite) Steuereinheit (20) nach Anspruch 10, dadurch gekennzeichnet, daß die zweite Steuereinheit (20) ein Erkennungsmittel aufweist, das derart ausgestaltet ist, daß die zweite Steuereinheit (20) ermitteln kann, daß sie über das zweite Kommunikationsmodul empfangene Steuerbefehle als gültige Steuerbefehle akzeptieren muß.

15. Steuereinheit nach Anspruch 9 oder 10, dadurch gekennzeichnet, daß das erste oder das zweite Kommunikationsmodul jeweils als eine auf die jeweilige Steuereinheit aufsteckbare Einheit ausgebildet ist.

16. Antriebseinheit mit einer sie steuernden (ersten) Steuereinheit (10) für ein Verdunklungssystem oder ein Verschattungssystem, die mit einer Bedienschnittstelle (101) zur Bedienung versehen ist, **dadurch gekennzeichnet, daß** die (erste) Steuereinheit (10) mindestens ein erstes Kommunikationsmodul (103) aufweist, das derart ausgestaltet ist, daß die erste Steuereinheit (10) Steuerbefehle an eine zweite Steuereinheit (20) versenden kann, die eine zweite motorische Antriebseinheit (205) steuern kann, die mit einer Bedienschnittstelle (201) zur Bedienung versehen ist und mindestens ein zweites Kommunikationsmodul (204) aufweist, das derart ausgestaltet ist, daß die zweite Steuereinheit (20) Steuerbefehle von der ersten Steuereinheit (10) empfangen kann.

17. Antriebseinheit mit einer sie steuernden (zweiten) Steuereinheit (20) für ein Verdunklungssystem oder ein Verschattungssystem, die mit einer Bedienschnittstelle (201) zur Bedienung versehen ist, **dadurch gekennzeichnet, daß** die (zweite) Steuereinheit (20) mindestens ein zweites Kommunikationsmodul (204) aufweist, das derart ausgestaltet ist, daß die zweite Steuereinheit (20) Steuerbefehle von einer ersten Steuereinheit (10) empfangen kann, die eine erste motorische Antriebseinheit (105) steuern kann, die mit einer Bedienschnittstelle (101) zur Bedienung versehen ist und mindestens ein erstes Kommunikationsmodul (103) aufweist, das derart ausgestaltet ist, daß die erste Steuereinheit (10) Steuerbefehle an die zweite Steuereinheit (20) senden kann. .
